# EUROPÄISCHE PATENTSCHRIFT

(11) **EP 3 013 458 B1**
(45) Veröffentlichungstag und Bekanntmachung des Hinweises auf die Patenterteilung: **26.12.2018**
(21) Anmeldenummer: 14772054.4
(22) Anmeldetag: 19.06.2014
(51) Int. Cl.: B01D 53/04, B01J 20/34, B01J 20/20, C01B 32/366

(54) **VERFAHREN UND VORRICHTUNG ZUR THERMISCHEN REINIGUNG ODER REINIGUNG UND AKTIVIERUNG VON BELADENEN KÖRNIGEN AKTIVKOHLEN**
METHOD AND DEVICE FOR THE THERMAL PURIFICATION OR PURIFICATION AND ACTIVATION OF CHARGED GRANULAR ACTIVATED CARBON
PROCÉDÉ ET DISPOSITIF DE NETTOYAGE OU DE NETTOYAGE ET ACTIVATION PAR VOIE THERMIQUE DE CHARBONS ACTIFS GRANULAIRES CHARGÉS

(30) Priorität: 24.06.2013 DE 102013011131
(43) Veröffentlichungstag der Anmeldung: 04.05.2016
(73) Patentinhaber: Projahn, Frank, 39112 Magdeburg (DE)
(72) Erfinder: PROJAHN, Frank, 39112 Magdeburg (DE); GROTHE, Jamina, 39307 Kade (DE)
(74) Vertreter: Kietzmann, Manfred
(86) Internationale Anmeldenummer: PCT/DE2014/000321
(87) Internationale Veröffentlichungsnummer: WO 2014/206392

(56) Entgegenhaltungen:
- EP-A1- 0 521 239
- EP-A1- 1 897 852
- DE-A1- 3 925 630
- DE-B1- 1 769 859

## Beschreibung

Die Erfindung betrifft eine umwelt- und ressourcenschonende industrielle Anlage und ein Verfahren zum Reinigen oder Reinigen und Aktivieren von beladenen Granulat-, kugelförmigen und/oder Formaktivkohlen in einem Schritt. Ferner wird eine vorteilhafte Reaktordichtung benannt.

Reinigungsverfahren zur Behandlung von beladenen Aktivkohlen sind allgemein bekannt und werden großtechnisch angewendet. Reaktiviert werden Aktivkohlen aus der Aufbereitung von Trinkwasser und Nahrungsmitteln sowie Aktivkohlen aus industriellen und chemischen Aufbereitungsprozessen sowie aus Umweltschutzanwendungen. Die genutzte Technik sind u.a. Drehrohrofen, Etagenöfen oder Fließbettöfen. Die Aktivkohle wird in drei Schritten reaktiviert:
(1) bis 100 °C Trocknung
(2) 100 - 700 °C Desorption und Pyrolyse der Schadstoffe
(3) über 700 °C Reaktivierung der Aktivkohle (Wassergasreaktion)

So ist aus der DE 1 769 859 B1 ein Wirbelschichtreaktor bekannt, der die Verfahrensstufen des Trocknens, Aufheizens und Reaktivierens zu realisieren vermag. Dazu wird ein speziell ausgebildeter Anströmboden vorgeschlagen, der den Reaktor in einen Innen- und einen Außenraum unterteilt.

Bei diesem thermischen Prozess freigesetzte Schadstoffe werden anschließend bei Temperaturen > 1.000°C verbrannt. Diese Reinigung ist sehr energieintensiv.

Weiter ist aus der DE 39 25 630 A1 eine Umlauf-Wirbelbettvorrichtung bekannt zur Vergasung von kohlenstoffhaltigen Ausgangsmaterialien, die am Behälterboden angebrachte Standröhre als Fluidzuführeinrichtungen aufweist. Diese Konstruktion ist technisch aufwendig.

Ein weiterer Nachteil des Standes der Technik besteht darin, dass nicht alle beladenen Aktivkohlen gereinigt werden können. Dazu zählen insbesondere schwefelbeladene Aktivkohlen und siloxanebeladene Aktivkohlen. Grund dafür ist, dass bei der Reinigung von schwefelbeladenen Aktivkohlen aggressive Gase entstehen, die die Anlagentechnik zerstören und bei siloxanebeladenen Aktivkohlen ein Öl entsteht, das in den Anlagen nicht gehandhabt werden kann und ebenfalls die Anlagentechnik zerstört.

Schwefelbeladene Aktivkohlen stammen aus der Feinabscheidung von Schwefel aus Schwefelwasserstoff. Dieses entsteht bspw. bei der Reinigung von Biogas in Biogasanlagen. Dabei ist die Originalaktivkohle mit Kaliumjodid (KJ) imprägniert. Diese Imprägnierung dient als Katalysator, um den Schwefel vom Schwefelwasserstoff (H₂S) zu trennen.

Siloxanebeladene Aktivkohlen entstehen bei der Reinigung von Klär- und Deponiegasen. Neben den Siloxanen werden auch verschiedene Kohlenwasserstoffe, wie BTEXe (Benzol, Toluol, Ethylbenzol und Xylole), von der Aktivkohle aufgenommen.

Aufgabe der Erfindung ist es, eine neuartige thermische und wirtschaftlich besonders vorteilhafte Technologie zur Reinigung oder zur Reinigung und Aktivierung von unterschiedlich beladenen Aktivkohlen vorzuschlagen, vorzugsweise für schwefelbeladene und siloxanebeladene Aktivkohlen. Weiterhin sollen dabei energetisch oder rohstofflich wertvolle Substanzen abgetrennt werden, so dass diese einer weiteren Nutzung zugeführt werden können. Die vollständig gereinigte Aktivkohle kann erneut zum Einsatz als Adsorptionsmittel genutzt werden.

Gelöst wird diese Aufgabe anlagentechnisch mit den Merkmalen des Anspruches 1. Das Verfahren ist Gegenstand von Anspruch 10. Vorteilhafte Ausgestaltungen sind Gegenstand der Unteransprüche.
Die Literatur sagt übereinstimmend aus, dass der Schwefel auf schwefelbeladenen Aktivkohlen fast ausschließlich elementarer Schwefel ist. Dieser Lehre wird in der Erfindung nicht gefolgt. Vielmehr wurde festgestellt, dass ein weitaus höherer Anteil des Schwefels nicht als elementarer Schwefel, sondern in Schwefelverbindungen auf der Aktivkohle vorliegt, da bei der Erwärmung der schwefelbeladenen Aktivkohle sehr viel Wasserstoff (H₂) entsteht, folglich der Wasserstoff vom Schwefelwasserstoff (H₂S) abgespalten wird.

Der Reaktorbehälter zur Reinigung oder zur Reinigung und Aktivierung von beladenen körnigen Aktivkohlen, der in einem Ofen aufheizbar ist und dessen Abgas in ein außerhalb des Ofens angeordnetes Kühlsystem zur Kondensation und Sammlung der Inhaltsstoffe geleitet wird, wobei die Temperatur der aus dem Reaktorbehältertopf kommenden Abgase detektierbar ist, weist erfindungsgemäß mindestens auf
einen zylinderförmigen Reaktorbehältertopf, der durch einen Reaktorbehältertopfdeckel abgedichtet verschließbar ist, wobei der Reaktorbehältertopf im Bodenbereich eine Dampfzuleitung und der Reaktorbehältertopfdeckel eine Abgasleitung aufweisen,
ein oberhalb der Dampfzuleitung angeordnetes gelochtes Bodenblech und
zylinderförmige Belüftungseinsätze, die beabstandet zueinander und zur Innenwandung des Reaktorbehältertopfes mit einer offenen Fläche auf dem Bodenblech anliegen, deren Zylindermantel gelocht ist und deren geschlossenes Kopfteil an den Zylindermantel anschließt,
sowie einen oberhalb der Belüftungseinsätze und beabstandet zu deren Kopfteil angeordneten gelochten Topfeinsatz,
wobei der Raum zwischen den Belüftungseinsätzen, der Innenwandung des Reaktorbehältertopfes und unten begrenzt durch das Bodenblech mit beladener Aktivkohle befüllbar ist.

Wird der vorgeschlagene Reaktorbehälter verfahrensgemäß betrieben, lassen sich beladene Aktivkohlen vollständig reinigen und durch die Aktivierung die ursprüngliche BET-Oberfläche zu ≥ 98% wieder herstellen. Die Konsistenz und Form der Aktivkohle (Formaktivkohle, Granulat oder Kugeln) bleibt dabei erhalten.

Bei einer bevorzugten Ausführung sind die drei Belüftungseinsätze symmetrisch im Reaktorbehältertopf auf dem Bodenblech angeordnet. Sie sorgen mit dafür, dass die beladenen Aktivkohlen gleichmäßig erwärmt werden.

Von Vorteil für die Funktion des Reaktorbehälters ist es, wenn das gelochte Bodenblech und der gelochte Topfeinsatz den Querschnitt des Reaktorbehältertopfes vollflächig ausfüllen.

Dabei sind das gelochte Bodenblech und der gelochte Topfeinsatz bevorzugt an der Wandung des Reaktorbehältertopfes abgestützt und herausnehmbar gelagert.

Die Herausnehmbarkeit des gelochten Bodenbleches wird verbessert, wenn es geteilt ausgebildet ist, vorzugsweise in zwei Halbkreisscheiben.

Der gelochte Topfeinsatz bewirkt zum einen eine Erhitzung des Gases vor dem Austritt in die Abgasleitung und zum anderen eine Verwirbelungen des Gases, so dass dieses länger der Hitze ausgesetzt ist vor dem Austritt.

Durch das gelochte Bodenblech werden die Wärme- und die Wasserdampfverteilung optimiert.

Der Reaktorbehältertopfdeckel ist bevorzugt ein Klöpperboden, der mit zwei Abgasleitungen ausgestattet ist, die zu einer Abgasleitung zusammengeführt werden.

Um die Dichtheit des Reaktorbehälters zu gewährleisten weisen der Reaktorbehältertopfdeckel und der Reaktorbehältertopf außen umlaufende Verbindungsflansche auf, die miteinander verbindbar sind zum drucksicheren Verschluss des Reaktorbehälters, wobei in einem Verbindungsflansch eine Dichtungsnut zur Aufnahme einer Dichtung angeordnet ist und der andere Verbindungsflansch einen umlaufenden Dichtungssteg aufweist, der beim Zusammenfügen in die Dichtungsnut eingreift. Als Dichtung findet bevorzugt eine Keramik-Grafit-Dichtung Anwendung.

Ferner besitzt der Reaktorbehältertopf bei einer vorteilhaften Ausgestaltung im Öffnungsbereich eine "vorgelagerte" Dichtung. An der Innenwandung befindet sich dafür eine nach oben zum Reaktorbehältertopfdeckel hin offene, umlaufende Reaktorbehältertopfinnennut, in die ein beim Verschließen nach unten weisender, am Reaktortopfdeckel umlaufend angeordneter Deckeldichtungssteg eingreift.

Der verbleibende Raum zwischen der Reaktorbehältertopfinnennut und dem Deckeldichtungssteg ist mit Kohlenstoff oder einem bei den Reaktortemperaturen nicht reagierenden Stoff verfüllt.
Die Sicherheit der Dichtheit wird so weiter verbessert, da die Dichtung in den Verbindungsflanschen durch die "vorgelagerte" Dichtung: Deckeldichtungssteg-Reaktorbehältertopfinnennut-Kohlenstofffüllung vor zu hoher Erwärmung und vor den Gasen selbst geschützt wird.

Bei einer weiteren vorteilhaften Ausführung ist vorgesehen, dass in die Reaktorbehältertopfinnennut eine von außerhalb des Ofens kommende Sicherheitsrohrleitung mündet, die vorzugsweise eine Druckanzeige aufweist und über ein Ventil zum Auslass aus der Sicherheitsrohrleitung verfügt. So lassen sich Undichtheiten in der "vorgelagerten" Dichtung leicht feststellen, ohne dass die Gefahr eines Gasaustritts besteht.

Das Verfahren zur thermischen Reinigung oder zur Reinigung und Aktivierung von beladenen körnigen Aktivkohlen in einem Reaktorbehälter, der in einem Ofen aufheizbar und dessen Abgastemperatur außerhalb des Ofens detektierbar ist, mit einem zylinderförmigen Reaktorbehältertopf, der durch einen Reaktorbehältertopfdeckel abgedichtet verschließbar ist, wobei der Reaktorbehältertopf im Bodenbereich eine Dampfzuleitung und der Reaktorbehältertopfdeckel eine Abgasleitung aufweisen, mit einem oberhalb der Dampfzuleitung angeordneten gelochten Bodenblech und mit zylinderförmigen Belüftungseinsätzen, die beabstandet zueinander und zur Innenwandung des Reaktorbehältertopfes mit einer offenen Fläche auf dem Bodenblech anliegen, deren Zylindermantel gelocht ist und deren geschlossenes Kopfteil an den Zylindermantel anschließt, sowie mit einem oberhalb der Belüftungseinsätze und beabstandet zu deren Kopfteil angeordneten gelochten Topfeinsatz, wobei der Raum zwischen den Belüftungseinsätzen, der Innenwandung des Reaktorbehältertopfes und unten begrenzt durch das Bodenblech mit beladener Aktivkohle befüllbar ist, sieht erfindungsgemäß folgende Schritte vor:
a) nach dem Befüllen des Reaktorbehältertopfes bis an den oberen Rand der Belüftungseinsätze wird der Reaktorbehältertopf verschlossen und der Reaktorbehälter in einen Ofen eingebracht, wo mindesrens die Anschlüsse zu der aus dem Ofen herausführenden Abgasleitung und
   der in den Ofen hineingeführten Dampfzuleitung herstellt werden,
b) es erfolgt ein Rumdumerwärmen des Reaktorbehälters bei einer Ofentemperatur von 250° - 350°C bis die außerhalb des Ofens gemessene Abgastemperatur aus dem Reaktorbehälter einen Wert zwischen 45° und 55°C erreicht,
c) über die Dampfzuleitung wird dann überhitzter Wasserdampf in den Bodenraum des Reaktorbehältertopfes des Reaktorbehälters eingeblasen bis die Abgastemperatur einen Wert von höchstens 100°C aufweist,
d) dann wird die Ofentemperatur auf einen Wert von 450 - 500°C erhöht,
e) bei einer ausschließlichen Reinigung wird, wenn die Abgastemperatur bei Beibehaltung der Ofentemperatur einen Wert zwischen 30° und 40°C, vorzugsweise um 35°C erreicht hat,
   die Heizung des Ofens abgeschaltet und nach einer Abkühlzeit wird der Reaktorbehälter aus dem Ofen nach vorherigem Lösen der Anschlussleitungen herausgefahren, geöffnet und die gereinigten Aktivkohlen entnommen oder
f) bei einer Reinigung und Aktivierung wird, wenn die Abgastemperatur einen Wert zwischen 55° und 65°C, vorzugsweise um die 60°C,
   erreicht hat, die Ofentemperatur auf einen Wert zwischen 750° - 820°C erhöht für einen Zeitraum bis die Abgastemperatur zwischen 25° und 35°C liegt, vorzugsweise um die 30°C,
g) es erfolgt dann bei Beibehaltung der Ofentemperatur eine weitere Zugabe von überhitztem Dampf über einen Zeitraum von etwa einer Stunde, und/oder die Dampfzugabe wird abgebrochen, wenn die Abgastemperatur den Wert von 70°C zu übersteigen droht,
h) hat die Abgastemperatur nach dem Abbruch der Dampfzuführung einen Wert zwischen 30° und 40°, erreicht, vorzugsweise um 35°C, wird die Heizung des Ofens abgeschaltet und nach einer Abkühlzeit wird der Reaktorbehälter aus dem Ofen nach vorherigem Lösen der Anschlussleitungen herausgefahren, geöffnet und die gereinigten und aktivierten Aktivkohlen werden entnommen.

Der eingeblasene überhitzte Wasserdampf weist bevorzugt eine Temperatur zwischen 115° und 125°C auf bei einem Druck von 30 bis 40 Millibar.

Von wesentlicher Bedeutung für den Erfolgt des Verfahrens ist eine gleichmäßige Erwärmung der Aktivkohle. Hierbei kommt dem Dampfzusatz große Bedeutung zu. Das Einblasen von Dampf gemäß Verfahrensschritt c) erfolgt unter Bedingungen, wo die erhitzte Luft im Reaktorraum 300 bis 350°C aufweist, die Aktivkohle hingegen im Kern erst 40°C, was zur Dampfkondensation führt. Die so in der Aktivkohleschüttung verweilende und schrittweise wieder verdampfende Flüssigkeit bewirkt einen Wärmetransport von der Grenzschicht der Aktivkohle, wo sich Gase bilden, in deren Kern ohne größere radiale und nur geringe axiale Temperaturprofilunterschiede.

Das Abgas wird nach der Temperaturmessung in eine Kühlschlange und/oder einen Abkühlbehälter zum Abkühlen eingebracht, wobei auskondensierende flüssige Stoffe in Auffangbehälter geleitet werden und gasförmige Stoffe einer Verbrennungsanlage zur Energieerzeugung zugeleitet werden.

Neben brennbarem Gas fallen Öle an, verwendbar als Brennstoff für Block-Heiz-Kraftwerke (BHKW). Bei der Reinigung schwefelbeladener Aktivkohlen fallen schwefelhaltige wässrige Lösungen an, aus denen elementarer Schwefel, Schwefel kristalliner Struktur und/oder plastischer Schwefel gewonnen werden kann.

Bei der Reinigung und Aktivierung von siloxanebeladenen Aktivkohlen entsteht neben energetisch verwertbaren Gasen und Oel ein Abwasser, das entsorgt werden muss. Pro Tonne beladener Kohle beträgt das Abwasser rund 20 Liter.

Versuche haben gezeigt, dass aus einer Tonne beladener Aktivkohlen, die in einen Reaktionsbehälter eingebracht wird, im Schnitt 0,6 Tonnen gereinigte Aktivkohlen gewonnen werden, wobei die ursprüngliche BET-Oberfläche zu ≥ 98% erreicht wird.

Durch den erneuten Einsatz der Aktivkohlen wird Ressourcenschonung betrieben und werden CO₂ Emissionen deutlich reduziert, denn bisher werden diese kontaminierten Aktivkohlen verbrannt oder als Sondermüll deponiert.

Der Reaktor mit seiner Dichtungsanordnung sollen anhand der Zeichnung erläutert werden. Es zeigen:
- Fig. 1:: den Reaktorbehälter und
- Fig. 2:: die Dichtung im Detail.

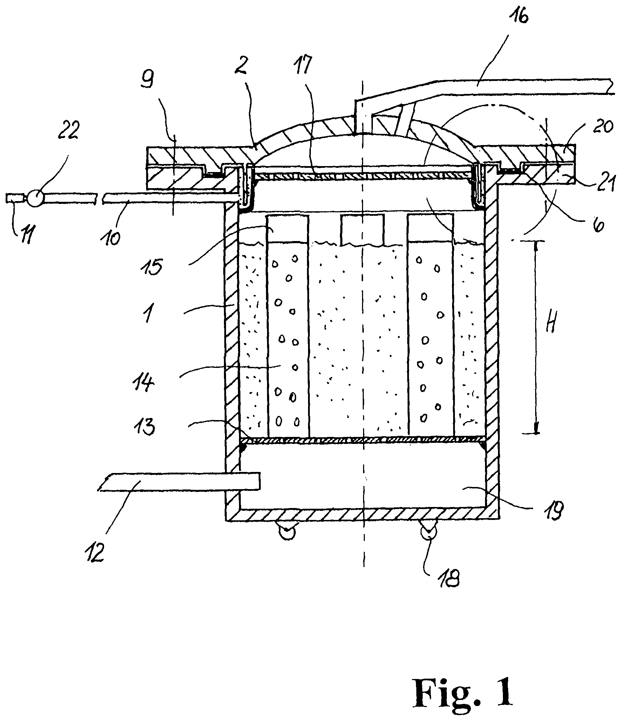

Der in **Fig. 1** dargestellte Reaktorbehälter, der in einem nicht dargestellten Ofen aufheizbar ist und dessen Abgas in ein außerhalb des Ofens angeordnetes Kühlsystem zur Kondensation und Sammlung der Inhaltsstoffe geleitet wird, wobei die Temperatur der aus dem Reaktorbehälter kommenden Abgas detektierbar ist, besteht aus einem zylinderförmigen Reaktorbehältertopf 1, der durch einen Reaktorbehältertopfdeckel 2 abgedichtet verschließbar ist, wobei der Reaktorbehältertopf 1 im Bodenbereich eine Dampfzuleitung 12 und der Reaktorbehältertopfdeckel 2 eine Abgasleitung 16 aufweisen.

In der Abgasleitung 16 wird die Abgastemperatur unmittelbar nach dem Austritt aus dem Ofen gemessen.

Oberhalb der Dampfzuleitung 12 ist ein gelochtes Bodenblech 13 angeordnet, auf dem drei zylinderförmige Belüftungseinsätze 14, die beabstandet zueinander und zur Innenwandung des Reaktorbehältertopfes 1 mit einer offenen Fläche auf dem Bodenblech 13 aufliegen. Der Zylindermantel der Belüftungseinsätze 14 ist gelocht ausgeführt, wobei sich das geschlossene Kopfteil 15 an den Zylindermantel anschließt. Die Belüftungseinsätze 14 stehen symmetrisch zueinander.

Der Raum zwischen den Belüftungseinsätzen 14, der Innenwandung des Reaktortopfes 1 und unten begrenzt durch das Bodenblech 13 ist mit beladenen Aktivkohlen befüllbar mit der Füllhöhe H.

Oberhalb der Belüftungseinsätze 14 und beabstandet zu deren Kopfteil 15 befindet sich ein gelochter Topfeinsatz 17.

Das gelochte Bodenblech 13 und der gelochte Topfeinsatz 17 füllen den Querschnitt des Reaktorbehältertopfes 1 vollflächig aus. Sie sind an der Wandung des Reaktorbehältertopfes 1 bzw. der Reaktorbehältertopfinnennut 4 abgestützt und herausnehmbar.

Da der innere Durchmesser des Reaktorbehältertopfes 1 im Bereich des Topfeinsatzes 17 durch die hier angeordnete "vorgelagerte" Dichtung etwas kleiner ist als im Bereich des Bodenbleches 13, ist das gelochte Bodenblech 13 geteilt ausgebildet, vorzugsweise in zwei Halbkreisscheiben. So lässt es sich auch aus dem Reaktortopf 1 entfernen.

Der Reaktorbehältertopfdeckel 2 und der Reaktorbehältertopf 1 weisen außen umlaufende Verbindungsflansche 20, 21 auf, die miteinander verschraubbar sind zum drucksicheren Verschluss des Reaktorbehälters, wobei im Verbindungsflansch 21 eine Dichtungsnut 7 zur Aufnahme einer Keramik-Grafit-Dichtung 6 angeordnet ist und der andere Verbindungsflansch 20 einen umlaufenden Dichtungssteg 8 aufweist, der beim Zusammenfügen in die Dichtungsnut 7 eingreift.

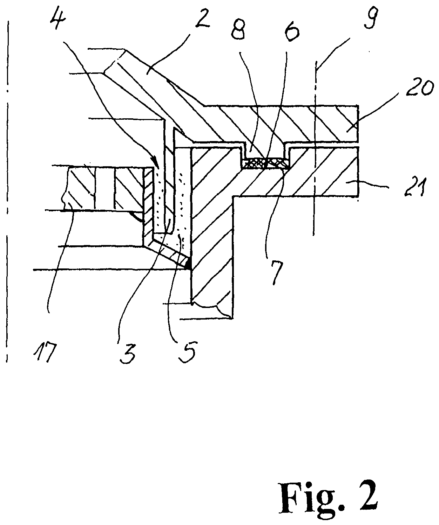

Die Dichtung 6 der Verbindungsflansche 20, 21 weist eine "vorgelagerte" Dichtung auf, die in **Fig. 2** vergrößert dargestellt ist.

Der Reaktorbehältertopf 1 weist im Öffnungsbereich, vorzugsweise in Höhe des Topfeinsatzes 17 an der Innenwand eine nach oben zum Reaktorbehälterdeckel 2 hin offene, umlaufende Reaktorbehältertopfinnennut 4 auf, in die ein beim Verschließen nach unten weisender, am Reaktortopfdeckel 2 umlaufend angeordneter Deckeldichtungssteg 3 eingreift. Der verbleibende Raum zwischen der Reaktorbehältertopfinnennut 4 und dem Deckeldichtungssteg 3 ist mit Kohlenstoff 5 oder einem bei den Reaktortemperaturen nicht reagierenden Stoff verfüllt.

In die Reaktorbehältertopfinnennut 4 mündet eine von außerhalb des Ofens kommende Sicherheitsrohrleitung 10, die eine Druckanzeige 22 aufweist und über ein Ventil 11 zum Auslass verfügt (Fig.1).

### Nichtpatentliteratur

http://www.chemvironcarbon.com/de/reaktivierung Donau Carbon; Broschüre "Aktivkohle und ihre Anwendung"

### Bezugszeichenliste

- 1: Reaktorbehältertopf
- 2: Reaktorbehältertopfdeckel
- 3: Deckeldichtungssteg
- 4: Reaktorbehältertopfinnennut
- 5: Kohlenstoff
- 6: Dichtung
- 7: Dichtungsnut
- 8: Dichtungssteg
- 9: Verschlussbolzen
- 10: Sicherheitsrohrleitung
- 11: Ventil
- 12: Dampfzuleitung
- 13: Bodenblech gelocht
- 14: Belüftungseinsätze
- 15: Kopfteil des Belüftungseinsatzes
- 16: Abgasleitung
- 17: Topfeinsatz gelocht
- 18: Rollen
- 19: Bodenraum
- 20: Verbindungsflansch
- 21: Verbindungsflansch
- 22: Druckanzeige
- H: = Füllhöhe

## Patentansprüche

1. Reaktorbehälter zur Reinigung oder zur Reinigung und Aktivierung von beladenen körnigen Aktivkohlen, der in einem Ofen aufheizbar ist und dessen Abgas in ein außerhalb des Ofens angeordnetes Kühlsystem zur Kondensation und Sammlung der Inhaltsstoffe geleitet wird, wobei die Temperatur der aus dem Reaktorbehälter kommenden Abgase detektierbar ist, weist mindestens auf
einen zylinderförmigen Reaktorbehältertopf (1), der durch einen Reaktorbehältertopfdeckel (2) abgedichtet verschließbar ist, wobei der Reaktorbehältertopf (1) im Bodenbereich eine Dampfzuleitung (12) und der Reaktorbehältertopfdeckel (2) eine Abgasleitung (16) aufweisen,
ein oberhalb der Dampfzuleitung (12) angeordnetes gelochtes Bodenblech (13) und
zylinderförmige Belüftungseinsätze (14), die beabstandet zueinander und zur Innenwandung des Reaktorbehältertopfes (1) mit einer offenen Fläche auf dem Bodenblech (13) anliegen, deren Zylindermantel gelocht ist und deren geschlossenes Kopfteil (15) an den Zylindermantel anschließt,
sowie einen oberhalb der Belüftungseinsätze (14) und beabstandet zu deren Kopfteil (15) angeordneten gelochten Topfeinsatz (17),
wobei der Raum zwischen den Belüftungseinsätzen (14), der Innenwandung des Reaktorbehältertopfes (1) und unten begrenzt durch das Bodenblech (13) mit beladener Aktivkohle befüllbar ist.

2. Reaktorbehälter nach Anspruch 1, **dadurch gekennzeichnet, dass**
drei Belüftungseinsätze (14) symmetrisch im Reaktorbehältertopf (1) auf dem Bodenblech (13) angeordnet sind.

3. Reaktorbehälter nach Anspruch 1 oder 2, **dadurch gekennzeichnet, dass**
das gelochte Bodenblech (13) und der gelochte Topfeinsatz (17) den Querschnitt des Reaktorbehältertopfes (1) vollflächig ausfüllen.

4. Reaktorbehälter nach einem der Ansprüche 1 bis 3, **dadurch gekennzeichnet, dass**
das gelochte Bodenblech (13) und der gelochte Topfeinsatz (17) an der Wandung des Reaktorbehältertopfes (1) abgestützt und herausnehmbar sind.

5. Reaktorbehälter nach einem der Ansprüche 1 bis 4, **dadurch gekennzeichnet, dass**
das gelochte Bodenblech (13) geteilt ausgebildet ist, vorzugsweise in zwei Halbkreisscheiben.

6. Reaktorbehälter nach einem der Ansprüche 1 bis 5, **dadurch gekennzeichnet, dass**
der Reaktorbehältertopfdeckel (2) und der Reaktorbehältertopf (1) außen umlaufende Verbindungsflansche (20, 21) aufweisen, die miteinander verbindbar sind zum drucksicheren Verschluss des Reaktorbehälters, wobei in einem Verbindungsflansch (20 oder 21) eine Dichtungsnut (7) zur Aufnahme einer Dichtung (6) angeordnet ist und der andere Verbindungsflansch (21 oder 20) einen umlaufenden Dichtungssteg (8) aufweist, der beim Zusammenfügen in die Dichtungsnut (7) eingreift.

7. Reaktorbehälter nach einem der Ansprüche 1 bis 6, **dadurch gekennzeichnet, dass**
der Reaktorbehältertopf (1) im Öffnungsbereich an der Innenwandung eine nach oben zum Reaktorbehältertopfdeckel (2) hin offene, umlaufende Reaktorbehältertopfinnennut (4) aufweist, in die ein beim Verschließen nach unten weisender, am Reaktortopfdeckel (2) umlaufend angeordneter Deckeldichtungssteg (3) eingreift.

8. Reaktorbehälter nach Anspruch 7, **dadurch gekennzeichnet, dass**
der verbleibende Raum zwischen der Reaktorbehältertopfinnennut (4) und dem Deckeldichtungssteg (3) mit Kohlenstoff oder einem bei den Reaktortemperaturen nicht reagierenden Stoff verfüllt ist.

9. Reaktorbehälter nach Anspruch 7 oder 8, **dadurch gekennzeichnet, dass**
in die Reaktorbehältertopfinnennut (4) eine von außerhalb des Ofens kommende Sicherheitsrohrleitung (10) mündet, die eine Druckanzeige (22) aufweist und über ein Ventil (11) zum Auslass aus der Sicherheitsrohrleitung (10) verfügt.

10. Verfahren zur thermischen Reinigung oder Reinigung und Aktivierung von beladenen körnigen Aktivkohlen in einem Reaktorbehälter nach einem der Ansprüche 1 bis 9, der in einem Ofen aufheizbar und dessen Abgastemperatur außerhalb des Ofens detektierbar ist, mit folgenden Schritten
a) nach dem Befüllen des Reaktorbehältertopfes (1) bis an den oberen Rand der Belüftungseinsätze (14) wird der Reaktorbehältertopf (1) verschlossen und der Reaktorbehälter in einen Ofen eingebracht, wo mindestens die Anschlüsse zu der aus dem Ofen herausführenden Abgasleitung (16) und der in den Ofen hineingeführten Dampfzuleitung (12) herstellt werden,
b) es erfolgt ein Rumdumerwärmen des Reaktorbehälters bei einer Ofentemperatur von 250° - 350°C bis die außerhalb des Ofens gemessene Abgastemperatur aus dem Reaktorbehälter einen Wert zwischen 45° und 55°C erreicht,
c) über die Dampfzuleitung (12) wird dann überhitzter Wasserdampf in den Bodenraum (19) des Reaktorbehältertopfes des Reaktorbehälters eingeblasen bis die Abgastemperatur einen Wert von höchstens 100°C aufweist,
d) dann wird die Ofentemperatur auf einen Wert von 450 - 500°C erhöht,
e) bei einer ausschließlichen Reinigung wird, wenn die Abgastemperatur bei Beibehaltung der Ofentemperatur einen Wert zwischen 30° und 40°C erreicht hat, die Heizung des Ofens abgeschaltet und nach einer Abkühlzeit wird der Reaktorbehälter aus dem Ofen nach vorherigem Lösen der Anschlussleitungen herausgefahren, geöffnet und die gereinigten Aktivkohlen entnommen oder
f) bei einer Reinigung und Aktivierung wird, wenn die Abgastemperatur einen Wert zwischen 55° und 65°C erreicht hat, die Ofentemperatur auf einen Wert zwischen 750° - 820°C erhöht für einen Zeitraum bis die Abgastemperatur zwischen 25° und 35°C liegt,
g) es erfolgt dann bei Beibehaltung der Ofentemperatur eine weitere Zugabe von überhitztem Dampf über einen Zeitraum von etwa einer Stunde, oder die Dampfzugabe wird abgebrochen, wenn die Abgastemperatur den Wert von 70°C übersteigt oder zu übersteigen droht,
h) hat die Abgastemperatur nach dem Abbruch der Dampfzuführung einen Wert zwischen 30° und 40°C erreicht, wird die Heizung des Ofens abgeschaltet und nach einer Abkühlzeit wird der Reaktorbehälter aus dem Ofen nach vorherigem Lösen der Anschlussleitungen herausgefahren, geöffnet und die gereinigten und aktivierten Aktivkohlen entnommen.

11. Verfahren nach Anspruch 10, **dadurch gekennzeichnet, dass**
der eingeblasene überhitzte Wasserdampf eine Temperatur zwischen 115° und 125°C aufweist bei einem Druck von 30 bis 40 Millibar.

12. Verfahren nach Anspruch 10 oder 11, **dadurch gekennzeichnet, dass**
das Abgas nach der Temperaturmessung in eine Kühlschlange und/oder einen Abkühlbehälter zum Abkühlen eingebracht wird, wobei auskondensierende flüssige Stoffe in Auffangbehälter geleitet werden und gasförmige Stoffe einer Verbrennungsanlage zur Energieerzeugung zugeleitet werden.

13. Verfahren nach einem der Ansprüche 10 bis 12, **dadurch gekennzeichnet, dass**
die beladenen körnigen Aktivkohlen siloxane beladene und/oder schwefelbeladene Aktivkohlenbestandteile aufweisen.

## Claims

1. A reactor container for purifying or for purifying and activating charged granular activated carbon, which container can be heated in an oven and the waste gas whereof is conducted into a cooling system which is arranged outside of the oven and which is used for condensing and collecting the constituents, wherein the temperature of the waste gas exiting from the reactor container can be detected, has at least
one cylindrical reactor container top (1) which is closable in a sealing manner by a reactor container top cover (2), wherein the reactor container top (1) has, in the base area, a steam supply line (12) and the reactor container top cover (2) has a waste gas line (16),
a perforated base plate (13) which is arranged above the steam supply line (12), and
cylindrical ventilation inserts (14) which rest on the base plate (13) at a distance from each other and from the inner wall of the reactor container top (1) via an open surface, the cylinder casing being perforated and the closed head part (15) being connected to the cylinder casing,
as well as a perforated top insert (17) which is arranged above the ventilation inserts (14) and at a distance from the head part (15) thereof,
wherein the space between the ventilation inserts (14) and the inner wall of the reactor container top (1), defined at the base by the base plate (13), is fillable with charged activated carbon.

2. The reactor container according to Claim 1, **characterized in that**
three ventilation inserts (14) are arranged symmetrically in the reactor container top (1) on the base plate (13).

3. The reactor container according to Claim 1 or 2, **characterised in that**
the perforated base plate (13) and the perforated top insert (17) fill the cross-section of the reactor container top (1) over the entire surface.

4. The reactor container according to any one of Claims 1 to 3, **characterised in that**
the perforated base plate (13) and the perforated top insert (17) are supported on the wall of the reactor container top (1) and are removable.

5. The reactor container according to any one of Claims 1 to 4, **characterised in that**
the perforated base plate (13) is configured in a divided manner, preferably in two semi-circular discs.

6. The reactor container according to any one of Claims 1 to 5, **characterised in that**
the reactor container top cover (2) and the reactor container top (1) have circumferential connecting flanges (20, 21) externally, which are connectable to one another in order to close the reactor container in a pressure-resistant manner, wherein a sealing groove (7) for receiving a seal (6) is arranged in a connecting flange (20 or 21) and the other connecting flange (21 or 20) has a circumferential sealing web (8) which engages into the sealing groove (7) on being joined together.

7. The reactor container according to any one of Claims 1 to 6, **characterised in that**
the reactor container top (1) has, in the opening area on the inner wall, a circumferential reactor container top inner groove (4) which is open upwards towards the reactor container top cover (2), into which reactor container top internal groove a downwardly pointing cover sealing web (3), which is arranged in a circumferential manner on the reactor top cover (2), engages on closing.

8. The reactor container according to Claim 7, **characterized in that**
the remaining space between the reactor container top internal groove (4) and the cover sealing web (3) is filled with carbon or a substance which does not react at the reactor temperatures.

9. The reactor container according to Claim 7 or 8, **characterised in that**
a safety pipe (10) coming from outside of the oven opens into the reactor container top internal groove (4), which safety pipe has a pressure display (22) and features a valve (11) for the outlet from the safety pipe (10).

10. A method for thermally purifying or purifying and activating charged granular activated carbon in a reactor container according to any one of Claims 1 to 9,
which container can be heated in an oven
and the waste gas temperature whereof can be detected outside of the oven,
having the following steps
a) after filling the reactor container top (1) up to the upper edge of the ventilation inserts (14), the reactor container top (1) is closed and the reactor container is introduced into an oven, where at least the connections to the waste gas line (16) leading out of the oven and the steam supply line (12) guided into the oven are established,
b) the reactor container is completely warmed up at an oven temperature of 250°-350°C until the waste gas temperature from the reactor container measured outside of the oven reaches a value between 45° and 55°C,
c) overheated water vapour is then blown into the bottom space (19) of the reactor container top of the reactor container via the steam supply line (12) until the waste gas temperature has a value of a maximum of 100°C,
d) the oven temperature is then increased to a value of 450-500°C,
e) in the case of purification exclusively, when the waste gas temperature has reached a value between 30° and 40°C, while maintaining the oven temperature, the heating of the oven is switched off and, following a cooling period, the reactor container is moved out of the oven after previously loosening the connection lines, opened and the purified activated carbon is extracted, or
f) in the case of purification and activation, when the waste gas temperature has reached a value between 55° and 65°C, the oven temperature is increased to a value between 750°-820°C for a period until the waste gas temperature is between 25° and 35°C,
g) a further addition of overheated steam is then made over a period of approximately one hour, while maintaining the oven temperature, or the addition of steam is discontinued if the waste gas temperature exceeds or threatens to exceed the value of 70°C,
h) if the waste gas temperature has reached a value between 30° and 40°C following the discontinuation of the steam supply, the heating of the oven is switched off and, after a cooling period, the reactor container is moved out of the oven after previously loosening the connection lines, opened and the purified and activated active carbon is extracted.

11. The method according to Claim 10, **characterised in that**
the blown-in overheated water vapour has a temperature between 115° and 125°C at a pressure of 30 to 40 millibars.

12. The method according to Claim 10 or 11, **characterised in that**,
after measuring the temperature, the waste gas is introduced into a cooling coil and/or a cooling container for cooling, wherein liquid substances condensing out are conducted into collecting vessels and gaseous substances are fed to an incinerator in order to produce energy.

13. The method according to any one of Claims 10 to 12, **characterised in that**
the charged granular activated carbon has siloxane-charged and/or sulphur-charged activated carbon components.

## Revendications

1. Cuve de réacteur pour le nettoyage ou le nettoyage et l'activation de charbons actifs granulaires chargés, laquelle peut être chauffée dans un four et dont le gaz d'échappement est amené dans un système de refroidissement disposé hors du four pour la condensation et la collecte des constituants, la température du gaz d'échappement provenant de la cuve de réacteur pouvant être détectée, présentant au moins
un pot de cuve de réacteur (1) cylindrique, lequel peut être fermé de façon hermétique par un couvercle de pot de cuve de réacteur (2), le pot de cuve de réacteur (1) présentant une conduite d'alimentation en vapeur (12) dans la zone du fond et le couvercle de pot de cuve de réacteur (2) présentant une conduite de gaz d'échappement (16),
une tôle de fond (13) perforée disposée au-dessus de la conduite d'alimentation en vapeur (12) et
des éléments d'aération (14) cylindriques qui reposent sur la tôle de fond (13) à distance les uns des autres et vers la paroi intérieure du pot de cuve de réacteur (1), avec une surface ouverte, dont la chemise de cylindre est perforée et dont la tête fermée (15) est jointe à la chemise du cylindre,
ainsi qu'un élément de pot (17) perforé disposé au-dessus des éléments d'aération (14) et à distance de leur tête (15),
l'espace entre les éléments d'aération (14), la paroi intérieure du pot de cuve de réacteur (1) et limité en bas par la tôle de fond (13) pouvant être rempli par du charbon actif chargé.

2. Cuve de réacteur selon la revendication 1, **caractérisée en ce que**
trois éléments d'aération (14) sont disposés symétriquement sur la tôle de fond (13) dans le pot de cuve de réacteur (1).

3. Cuve de réacteur selon la revendication 1 ou 2, **caractérisée en ce que**
la tôle de fond perforée (13) et l'élément de pot perforé (17) remplissent la section du pot de cuve de réacteur (1) sur toute la surface.

4. Cuve de réacteur selon l'une quelconque des revendications 1 à 3, **caractérisée en ce que**
la tôle de fond perforée (13) et l'élément de pot perforé (17) sont appuyés sur la paroi du pot de cuve de réacteur (1) et sont amovibles.

5. Cuve de réacteur selon l'une quelconque des revendications 1 à 4, **caractérisée en ce que**
la tôle de fond perforée (13) est formée de façon divisée, de préférence en deux demi-cercles.

6. Cuve de réacteur selon l'une quelconque des
revendications 1 à 5, **caractérisée en ce que**
le couvercle de pot de cuve de réacteur (2) et le pot de cuve de réacteur (1) présentent des brides de raccordement (20, 21) extérieurement périphériques, lesquelles peuvent être raccordées entre elles pour la fermeture résistant à la pression de la cuve de réacteur, une rainure d'étanchéité (7) étant disposée dans une bride de raccordement (20 ou 21) pour l'accueil d'un joint (6) et l'autre bride de raccordement (21 ou 20) présentant une arête d'étanchéité (8) périphérique, laquelle pénètre dans la rainure d'étanchéité (7) lors de l'assemblage.

7. Cuve de réacteur selon l'une quelconque des revendications 1 à 6, **caractérisée en ce que**
le pot de cuve de réacteur (1) présente une rainure interne de pot de cuve de réacteur (4) périphérique ouverte vers le haut vers le couvercle de pot de cuve de réacteur (2), dans laquelle une arête d'étanchéité de couvercle (3) disposée de façon périphérique sur le couvercle de pot de réacteur (2) pénètre.

8. Cuve de réacteur selon la revendication 7, **caractérisée en ce que**
l'espace restant entre la rainure interne de pot de cuve de réacteur (4) et l'arête d'étanchéité de couvercle (3) est rempli par du carbone ou par une matière ne réagissant pas aux températures de réacteur.

9. Cuve de réacteur selon la revendication 7 ou 8, **caractérisée en ce qu'**
une conduite de sécurité (10) venant de l'extérieur du four débouche dans la rainure interne de pot de cuve de réacteur (4), laquelle conduite présente un indicateur de pression (22) et dispose d'une soupape (11) pour l'échappement hors de la conduite de sécurité (10).

10. Procédé pour le nettoyage thermique ou le nettoyage et l'activation de charbons actifs granulaires chargés dans une cuve de réacteur selon l'une quelconque des revendications 1 à 9,
laquelle peut être chauffée dans un four et dont la température de gaz d'échappement peut être détectée hors du four,
avec les étapes suivantes
a) le pot de cuve de réacteur (1) est fermé après le remplissage du pot de cuve de réacteur (1) jusqu'au bord supérieur des éléments d'aération (14) et la cuve de réacteur est amenée dans un four, où au moins les raccordements à la conduite de gaz d'échappement (16) menant hors du four et à la conduite d'alimentation en vapeur (12) amenée dans le four sont réalisés,
b) un chauffage périphérique de la cuve de réacteur est effectuée, à une température de four de 250 °C-350 °C jusqu'à ce que la température de gaz d'échappement de la cuve de réacteur, mesurée hors du four, atteigne une valeur entre 45 °C et 55 °C,
c) de la vapeur d'eau surchauffée est ensuite injectée par la conduite d'alimentation en vapeur (12) dans l'espace de fond (19) du pot de cuve de réacteur de la cuve de réacteur, jusqu'à ce que la température de gaz d'échappement présente une valeur de 100 °C maximum,
d) la température de four est ensuite augmentée jusqu'à une valeur de 450-500 °C,
e) lors d'un nettoyage simple, le chauffage du four est arrêté lorsque la température de gaz d'échappement a atteint une valeur entre 30 °C et 40 °C, avec maintien de la température de four, et la cuve de réacteur est sortie du four après un temps de refroidissement, après déconnexion préalable des conduites de raccordement, ouverte, et les charbons actifs nettoyés sont retirés, ou
f) lors d'un nettoyage et d'une activation, la température du four est augmentée jusqu'à une valeur entre 750 °C-820 °C, lorsque la température de gaz d'échappement a atteint une valeur entre 55 °C et 65 °C, pour une période de temps, jusqu'à ce que la température de gaz d'échappement se trouve entre 25 °C et 35 °C,
g) un autre apport de vapeur surchauffée est ensuite effectué sur une période de temps d'environ une heure, avec maintien de la température de four, ou l'apport de vapeur est interrompu lorsque la température de gaz d'échappement dépasse la valeur de 70 °C ou menace de la dépasser,
h) le chauffage du four est arrêté si la température de gaz d'échappement a atteint une valeur entre 30 °C et 40 °C, après l'interruption de l'alimentation en vapeur, et la cuve de réacteur est sortie du four après un temps de refroidissement, après déconnexion préalable des conduites de raccordement, ouverte, et les charbons actifs nettoyés et activés sont retirés.

11. Procédé selon la revendication 10, **caractérisé en ce que**
la vapeur surchauffée injectée présente une température entre 115 °C et 125 °C, pour une pression de 30 à 40 millibar.

12. Procédé selon la revendication 10 ou 11, **caractérisé en ce que**
le gaz d'échappement est amené dans un serpentin de refroidissement et/ou un récipient de refroidissement pour refroidissement, les substances liquides se condensant étant amenées dans des collecteurs et les substances gazeuses étant amenées à une installation de combustion pour la production d'énergie.

13. Procédé selon l'une quelconque des revendications 10 à 12, **caractérisé en ce que**
les charbons granulaires chargés présentent des composants de charbons actifs chargés de siloxane et/ou chargés de soufre.
